# EUROPÄISCHE PATENTSCHRIFT

(11) **EP 0 792 577 B1**
(45) Veröffentlichungstag und Bekanntmachung des Hinweises auf die Patenterteilung: **30.07.2003**
(21) Anmeldenummer: 97103014.3
(22) Anmeldetag: 25.02.1997
(51) Int. Cl.: A01F 15/07, B65B 11/04

(54) **Vorrichtung zum Umwickeln von Ballen aus landwirtschaftlichen Erntegütern**
Apparatus for wrapping bales of agricultural produce
Dispositif pour envelopper des balles de produits agricoles

(30) Priorität: 01.03.1996 DE 19608014
(43) Veröffentlichungstag der Anmeldung: 03.09.1997
(73) Patentinhaber: Lely Maschinenfabrik GmbH, 38304 Wolfenbüttel (DE)
(72) Erfinder: Geiser, Jens, 38173 Dettum (DE)

(56) Entgegenhaltungen:
- EP-A- 0 234 763
- WO-A-93/07059

## Beschreibung

In der WO-A-93/07059 ist eine fahrbare Vorrichtung zum Umwickeln von Ballen aus landwirtschaftlichen Erntegütern mit Folie dargestellt und beschrieben, die während des Wickelvorganges den Ballen mittels einer Fördereinrichtung und gleichzeitig die Vorrichtung in entgegengesetzter Richtung zur Vorschubbewegung des Ballens verschiebt. Bei unebenem Gelände kann zur Verschiebung der fahrbaren Vorrichtung auch ein eigener Antriebsmotor auf die Vorderachse des Wickelfahrzeuges wirken. Die zu umwickelnden Ballen müssen zunächst auf dem Feld mittels eines Ladegeräts (Frontlader) aufgenommen werden und einzeln auf die Vorrichtung gelegt werden. Die Ballen werden umwickelt und liegen dann schlauchförmig umhüllt in einer Reihe am endgültigen Lagerort. Zum Transport wird die Vorrichtung an ein Zugfahrzeug gehängt. Die Vorrichtung hat zwar an sich eine relativ hohe Durchsatzleistung. Nachteilig ist jedoch, dass die hohe Durchsatzleistung nur genutzt werden kann, wenn die Ballen vorher zum Lagerplatz gebracht wurden oder die Beschickung durch mehrere Ladefahrzeuge erfolgt. Nachteilig ist auch, dass keine Einzelballensilage, sondern ein Silagestrang gebildet wird, der bei kleinen Entnahmemengen ungünstig ist wegen der Gärung. Bei einer aus der EP 0234763 A1 bekannten Ausführung wird das Folienwickelgerät an die Dreipunkt-Anbaueinrichtung des Schleppers gekoppelt. Aus der EP 0208034 läßt sich eine andere Ausführungsform entnehmen, welche auf einem Fahrgestell angeordnet ist und von einem Schlepper gezogen wird. In beiden Fällen müssen die Ballen einzeln aufgenommen, mit Folie umwickelt, ggfs vorübergehend abgelegt und dann zum Lagerplatz transportiert werden. Hierbei nimmt der Transport des Ballens je nach Feldlänge besonders viel Zeit in Anspruch, da allenfalls die Ballen während des Transportes eingewickelt werden können. Zur Rationalisierung dieses Verfahrens ist in der EP 0110110 eine Vorrichtung dargestellt und beschrieben, die direkt an der Rundballenpresse angehängt ist. Der Ballen wird unmittelbar nach seiner Fertigstellung direkt auf die Vorrichtung gelegt, mit Folie umwickelt und auf dem Feld abgelegt. Allerdings muß auch hier der umwickelte Ballen mittels Frontlader und spezieller Greifzange aufgenommen werden und zum Lagerplatz transportiert werden. Die letztgenannten Verfahren haben folgende Nachteile:
- Sowohl bei der Ablage des umwickelten Ballens auf dem Feld als auch beim Transport mit dem Frontlader kann die Folie trotz schonender Behandlung durch geeignete Geräte sehr leicht beschädigt werden, was den Verderb der Silage zur Folge hat.
- Es ist zumindest ein zweiter Schlepper nebst Fahrer notwendig. Darüber hinaus entsprechen die beiden erstgenannten Ausführungen in ihrer Leistungsfähigkeit nicht mehr den Durchsatzleistungen moderner Pressen, wobei insbesondere bei den Quadergroßballenpressen mehrere Geräte gleichzeitig eingesetzt werden müssten mit entsprechend hohem Aufwand. Bezüglich der Silagequalität ist es jedoch wünschenswert, die Ballen möglichst bald nach ihrer Fertigstellung einzuwickeln.

Der Erfindung liegt die Aufgabe zugrunde, ein selbstfahrendes Wickelfahrzeug schaffen, welches einen mannlosen Betrieb und automatischen Ablauf aller Arbeitsvorgänge ohne Zwischenablage der mit Folie eingewickelten Ballen auf dem Feld ermöglicht.

Erfindungsgemäß wird diese Aufgabe gelöst durch ein selbstfahrendes Wickelfahrzeug mit eigenem Fahrgestell und wenigstens einer Lenkachse sowie eigenem Antriebsmotor, wobei die Steuerung der Fahrvorgänge und Arbeitsabläufe des Wickelfahrzeuges direkt oder indirekt in Abhängigkeit von der Position der Ballen erfolgt, die von einer auf der gleichen Betriebsfläche arbeitenden, vorausfahrenden Ballenpresse abgelegt werden.

Das selbstfahrend ausgebildete Wickelfahrzeug ermöglicht eine Fernsteuerung von einer Leitzentrale und/oder insbesondere eine automatische Steuerung in Kombination mit einer vorausfahrenden Presse, wobei die zuvor gepreßten Ballen nahezu unmittelbar durch ein oder auch mehrere Wickelfahrzeuge im Ein-Mann-Verfahren (nur der Schlepperfahrer für die Presse ist erforderlich) selbständig gefunden, aufgenommen, während des Transportes zum Lagerplatz gewickelt und dort in einer oder in mehreren Reihen abgelegt werden. Das Wickelfahrzeug ist prinzipiell durch Umprogrammieren der spezifischen Maschinendaten an verschiedene Pressen anpaßbar.

Zur Reduzierung der Transportzeiten und der Feldüberfahrten ist es vorteilhaft, daß das Wickelfahrzeug wenigstens zwei Einrichtungen zum Aufnehmen der Ballen aufweist, um wenigstens zwei Ballen nacheinander während der Fahrt einzuwickeln.

Um einen verzögerungsfreien Ablauf zu gewährleisten, ist ein automatisches Folienrollenwechselsystem oder ein automatisches Schnellwechselsystem für den kompletten Austausch von Wickelkopf einschließlich Folienrolle vorgesehen. Zusammen mit einem größeren Folienvorrat ergibt sich eine weitere Zeitersparnis.

Weitere Merkmale und Vorteile der Erfindung ergeben sich aus den Unteransprüchen und aus der nachfolgenden Beschreibung eines Ausführungsbeispiels anhand einer einzigen, dieses schematisch darstellenden Figur.

Das Wickelfahrzeug 1 besteht im wesentlichen aus einem, z.B. hydraulisch zur Ballenaufnahme absenkbaren, Fahrgestell 2 mit zwei Achsen 3,4, von denen wenigstens eine Achse 3 lenkbar ist, einer zwischen den Achsen 3,4 mittig angeordneten Antriebsquelle 5, z.B. ein Dieselmotor, zwei Einrichtungen 6,7 zum Aufnehmen und Drehen eines nicht dargestellten Ballens um eine seiner Mittelachsen sowie einer um eine vertikale Achse 8 rotierenden Einrichtung 9 mit Folien-Vorratsrolle 10 zum Umwickeln des Ballens mit Folie. Hinsichtlich des Aufbaues und der Wirkungsweise einer vorbekannten Einrichtung zum Ballenumwickeln kann z.B. auf die EP 0234763 verwiesen werden. Die Fahrtrichtung des Wickelfahrzeuges 1 ist durch Pfeil 11 gekennzeichnet, wobei das Wickelfahrzeug 1 auch in entgegengesetzter Richtung betreibbar ist. Die beiden Einrichtungen 6,7 zum Aufnehmen und Drehen des Ballens sind spiegelbildlich zur horizontalen Fahrzeugquermittelachse angeordnet. Die Einrichtung 9 zum Umwickeln des Ballens ist um 180° verschwenkbar und arretierbar von in Vollinie dargestellter Position 12, in der der auf der Einrichtung 6 lagernde Ballen umwickelt wird, in eine in Strichpunktlinie dargestellte zweite Position 13, in der ein Ballen auf der Einrichtung 7 umwickelt wird.

Die Ablaufsteuerung und Navigation des Wickelfahrzeuges 1 erfolgen durch eine im Wickelfahrzeug integrierte Elektronik, die als "Blackbox" mit der Zahl 14 gekennzeichnet ist und zumindest eine Sendeund Empfangsstation, einen Prozeßrechner sowie Datenspeicher umfaßt. Als Navigationshilfe dienen entweder bei Arbeitsbeginn am Feldrand aufzustellende Peilsender 15 oder vorzugsweise das "Global-Positioning-System (GPS), also Satellitennavigation.

Nachdem das Wickelfahrzeug 1 vom Fahrer der Presse am Feldrand per Fernsteuerung, z.B. über Funkfernsteuerung, von einem hinter der Presse befindlichen Anhänger abgeladen und in eine Parkposition gefahren wurde, wird der Lagerbereich für die fertig eingewickelten Ballen am Feldrand mittels elektronischer Navigationshilfen (Peilsender, Laserstrahl, Lichtschranken etc.) markiert.

Zunächst werden in üblicher Weise die auf dem Vorgewende des Feldes quer zur normalen Fahrtrichtung befindlichen Schwade aufgenommen und zu Ballen verpreßt. Dabei wird die Position der Presse in kurzen Zeitabständen, z.B. per GPS, im Wickelfahrzeug 1 abgespeichert. Jeder Abwurf eines fertigen Ballens wird dabei ebenfalls abgespeichert. Wenn die Schwade des Vorgewendes aufgepreßt sind und der Fahrer die längeren Hauptschwade aufzunehmen beginnt, wird vom Pressenfahrer per Funkfernsteuerung das Wickelfahrzeug 1 aus der Parkposition heraus in Betrieb genommen. Es wird somit gewährleistet, daß sich die beiden Fahrzeuge nicht gegenseitig behindern.

Durch die Abspeicherung der Fahrtroute und der Positionen der Ballenabwürfe ist das selbstfahrende Wickelfahrzeug 1 in der Lage, die Positionen der Ballen und deren Ausrichtung zu erkennen. Somit können die Ballen angefahren und aufgenommen werden. Durch seine symmetrische Bauart mit der dieselhydraulischen Antriebseinheit für den Fahrantrieb in der Mitte kann das Wickelfahrzeug 1 beidseitig einen Ballen aufnehmen. Die ebenfalls in Fahrtrichtung mittig angeordnete Wickeleinrichtung 9 kann somit nacheinander zwei Ballen während des Transportes umwickeln, wobei bereits nach der Aufnahme des ersten Ballens begonnen wird. Die fertiggewickelten Ballen werden am Feldrand an den zuvor aufgestellten Orientierungshilfen in einer Reihe ausgerichtet abgelegt.

Bei der Aufnahme der übrigen Ballen ist es wichtig, daß das Wickelfahrzeug 1 im wesentlichen die von der Presse zurückgelegte Route einhält, um die Ballen in der entsprechenden Reihenfolge aufzunehmen. Außerdem wird die Kollision mit festen Hindernissen dadurch ausgeschlossen, daß die Presse diesen Weg bereits zurückgelegt hat. Es wird auch gewährleistet, daß das Wickelfahrzeug 1 parallel zu noch am Boden liegenden Schwaden fährt und diese nicht überquert. Das Wickelfahrzeug 1 erkennt aber auch "Umwege" und ist "lernfähig": Die Fahrtroute mit Ballen erfolgt beispielsweise möglichst direkt zum Sammelplatz, aber immer entlang der bereits von der Presse bereits benutzten, definierten Routenabschnitte. Es werden bereits von Ballen geräumte Routenabschnitte als solche erkannt und somit nicht mehr in ihrer gesamten Länge abgefahren.

Für einen verzögerungslosen Ablauf ist besonders auf einen ausreichenden Vorrat an Folie zu achten. Der komplette Wickelkopf inclusive Folienrolle und Vorspannrollen wird z. B.automatisch bei Auslauf der vorhergehenden Folienrolle ausgetauscht. (Siehe Werkzeugwechsel bei NC-gesteuerten Werkzeugmaschinen)
Bei einem Gesamtvorrat von vier Folienrollen können 100-120 Ballen eingewickelt werden bevor das Wickelfahrzeug 1 neu bestückt werden muß. Ein ausgehender Folienvorrat würde dem Pressenfahrer in seiner Schlepperkabine auf einem Bedienpult (Fernsteuerung) rechtzeitig angezeigt.

Sämtliche Daten über Ballenzahl, Folienverbrauch, Ablageart und -ort der Ballen werden automatisch für die Abrechnung des Lohnunternehmers/Landwirtes gespeichert. Zweckmäßig kann auch eine Gewichtserfassung der Ballen auf dem Wickelfahrzeug 1 sein.

Eine autark auf dem Feld arbeitende, mannlose Arbeitsmaschine wie das Wickelfahrzeug 1 ist mit umfangreichen Sicherungen ausgestattet, wie z.B.
- optische Warnanzeigen (Rundumlichter etc.)
- akustische Warnanzeigen
- mechanische Sensoren (Tastbügel)
- Infrarotsensoren zur Wärmeerkennung von Lebewesen, Motoren etc.

Der Pressenfahrer kann das Wickelfahrzeug 1 jederzeit über einen NOT-AUS-Schalter außer Betrieb setzen. Die Presse und der Traktor werden ständig geortet und durch eine "Bannmeile" von ca. 20 m Radius geschützt. Sollte die Presse dem Wickelfahrzeug 1 während des normalen Arbeitsablaufs zu nahe kommen und den Abstand von 20 m unterschreiten, würde das Wickelfahrzeug 1 sofort sämtliche Arbeiten einstellen, um bei einer Überschreitung dieses Abstandes mit der Arbeit fortzufahren.

Sämtliche Fehlfunktionen werden dem Pressenfahrer auf seinem Bedienpult angezeigt.

Nachdem der letzte Ballen abgelegt wurde, verharrt das Wickelfahrzeug 1 in einer Warteposition, um wieder per Fernsteuerung vom Pressenfahrer auf den zwischenzeitlich angehängten Anhänger hinter der Presse gefahren zu werden.

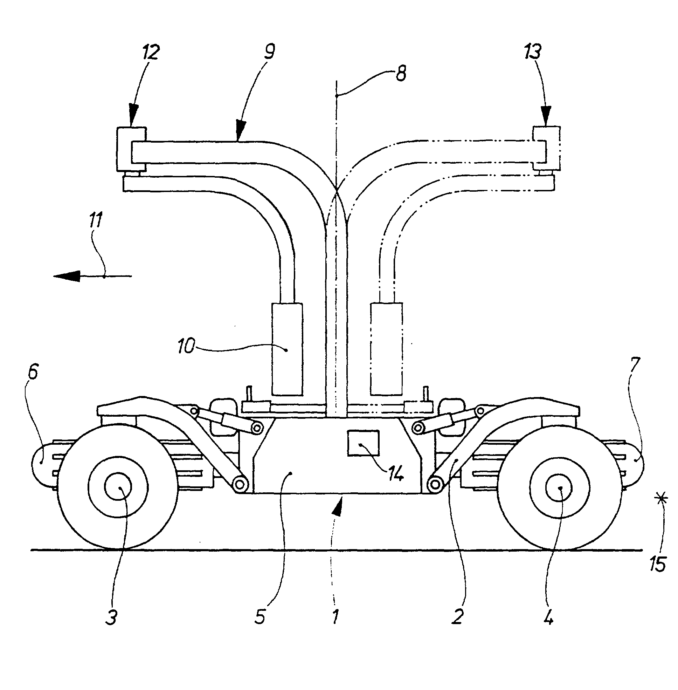

## Patentansprüche

1. Selbstfahrendes Wickelfahrzeug (1) mit eigenem Fahrgestell (2) und wenigstens einer Lenkachse (3) sowie eigenem Antriebsmotor (5), wobei die Steuerung der Fahrvorgänge und Arbeitsabläufe des Wickelfahrzeuges (1) direkt oder indirekt in Abhängigkeit von der Position der Ballen erfolgt, die von einer auf der gleichen Betriebsfläche arbeitenden, vorausfahrenden Ballenpresse abgelegt werden.

2. Wickelfahrzeug nach Anspruch 1, **gekennzeichnet durch** eine Fernsteuerung der Fahrvorgänge.

3. Wickelfahrzeug nach Anspruch 1 oder 2, **gekennzeichnet durch** einen automatischen, z.B. sensorgesteuerten Ablauf aller Arbeitsvorgänge, wie z.B. Ballenaufnahme, Ballendrehung, Umwicklung, Ballenablage.

4. Wickelfahrzeug nach einem oder mehreren der vorhergehenden Ansprüche, **dadurch gekennzeichnet, dass** das Wickelfahrzeug (1) Mittel aufweist zur Speicherung der Fahrtroute der Ballenpresse und Mittel zum entsprechenden Nachführen des Wickelfahrzeuges (1).

5. Wickelfahrzeug nach einem oder mehreren der vorhergehenden Ansprüche, **gekennzeichnet durch** eine Einrichtung, welche z.B. über das sogenannte GPS-System (Bestimmung des Standortes) den jeweiligen Standort einer vorausfahrenden Ballenpresse und/oder die Position eines abgelegten Ballens bestimmt.

6. Wickelfahrzeug nach einem oder mehreren der vorhergehenden Ansprüche, **gekennzeichnet durch** eine im Wickelfahrzeug (1) integrierte Elektronik, welche zumindest einen Prozessrechner mit Sende- und Empfangsstation sowie einen Prozessrechner und einen Datenspeicher aufweist zum Datenaustausch, z.B. mit einer Ballenpresse bzw. einer anderen elektronischen Leitstation.

7. Wickelfahrzeug nach einem oder mehreren der vorhergehenden Ansprüche, **dadurch gekennzeichnet, dass** das Wickelfahrzeug (1) mit am Lagerort für die fertig eingewickelten Ballen befindlichen Markierungen, z.B. mit elektronischen Navigationshilfen wie Peilsender, Laserstrahl, Lichtschranken o.ä. zusammenwirkt.

8. Wickelfahrzeug nach einem oder mehreren der vorhergehenden Ansprüche, **gekennzeichnet durch** Mittel, z.B. Sensoren, welche fehlerhafte Abläufe beim Umwickeln feststellen, den Wickelvorgang ggfs. unterbrechen und/oder die Fehler an eine Rechnerstation oder an die Bedienperson einer vorausfahrenden Ballenpresse melden.

9. Wickelfahrzeug nach einem oder mehreren der vorhergehenden Ansprüche, **gekennzeichnet durch** Mittel, die die Sicherheit von Mensch und Maschine und Tier gewährleisten, wie z.B. optische und/oder akustische Warnanzeigen, mechanische (Tastbügel) und/oder Infrarotsensoren zur Wärmeerkennung von Lebewesen und Motoren und einen fembetätigbaren Not-Aus Schalter, um das Wickelfahrzeug (1) außer Betrieb zu setzen.

10. Wickelfahrzeug nach einem oder mehreren der vorhergehenden Ansprüche, **gekennzeichnet durch** eine Abstandssensorik, welche das Wickelfahrzeug (1) selbsttätig auf Abstand zur vorausfahrenden Presse hält, um eine Kollision zu vermeiden.

11. Wickelfahrzeug nach einem oder mehreren der vorhergehenden Ansprüche, **dadurch gekennzeichnet, dass** das Wickelfahrzeug (1) wenigstens zwei Einrichtungen (6,7) für die Ballenaufnahme aufweist, um wenigstens zwei Ballen während der Fahrt mit Folie zu umwickeln.

12. Wickelfahrzeug nach Anspruch 11, **dadurch gekennzeichnet, dass** die Aufnahmeeinrichtungen (6, 7) spiegelbildlich angeordnet sind und mit nur einer verstellbaren Einrichtung (9) zum Umwickeln des Ballens zusammenwirken, um zwei Ballen nacheinander einzuwickeln.

13. Wickelfahrzeug nach einem oder mehreren der vorhergehenden Ansprüche, **dadurch gekennzeichnet, dass** ein automatisches Folienrollenwechselsystem oder ein automatisches Schnellwechselsystem für den kompletten Austausch von Umwickelkopf einschließlich Folienrolle (10) vorgesehen ist.

14. Wickelfahrzeug nach einem oder mehreren der vorhergehenden Ansprüche, **dadurch gekennzeichnet, dass** sämtliche Daten über Ballenanzahl, Folienverbrauch, Ablageart und -ort der Ballen sowie auch bei Bedarf Ballengewicht elektronisch gespeichert werden für die Abrechnung des Lohnunternehmers, Landwirtes.

## Claims

1. A self-propelled wrapping vehicle (1) with its own running gear (2) and at least one steering axle (3) together with its own drive motor (5), wherein the travel and operating cycles of the wrapping vehicle (1) are controlled directly or indirectly as a function of the position of the bales, which are set down by a baler travelling ahead and working the same operating area.

2. A wrapping vehicle according to claim 1, **characterised by** remote control of travel.

3. A wrapping vehicle according to claim 1 or claim 2, **characterised by** automatic, e.g. sensor-controlled, implementation of all operations, such as for example bale pick-up, bale rotation, wrapping, bale set-down.

4. A wrapping vehicle according to one or more of the preceding claims, **characterised in that** the wrapping vehicle (1) comprises means for storing the route travelled by the baler and means for directing the wrapping vehicle (1) to follow it.

5. A wrapping vehicle according to one or more of the preceding claims, **characterised by** a device which determines, using the so-called GPS (location finding) system for example, the respective location of a baler travelling ahead and/or the position of a set-down bale.

6. A wrapping vehicle according to one or more of the preceding claims, **characterised by** electronics incorporated into the wrapping vehicle (1), which electronics comprise at least one process computer with transmitting and receiving station and a process computer and a data memory for data exchange, e.g. with a baler or another electronic control station.

7. A wrapping vehicle according to one or more of the preceding claims, **characterised in that** the wrapping vehicle (1) cooperates with markers located at the storage location for the finished wrapped bales, e.g. with electronic navigation aids such as direction-finding transmitters, laser beams, photoelectric barriers or the like.

8. A wrapping vehicle according to one or more of the preceding claims, **characterised by** means, e.g. sensors, which detect faulty wrapping operations, optionally interrupt the wrapping process and/or report the faults to a computer station or the operator of a baler travelling ahead.

9. A wrapping vehicle according to one or more of the preceding claims, **characterised by** means which ensure the safety of man, machine and beast, such as for example optical and/or acoustic warning indicators, mechanical (stirrup-type feelers) and/or infrared sensors for detection of body and engine heat and a remote-actuated emergency stop switch, for stopping operation of the wrapping vehicle (1).

10. A wrapping vehicle according to one or more of the preceding claims, **characterised by** a distance sensor, which keeps the wrapping vehicle (1) automatically spaced from the baler travelling ahead, so as to prevent a collision.

11. A wrapping vehicle according to one or more of the preceding claims, **characterised in that** the wrapping vehicle (1) comprises at least two devices (6, 7) for bale pick-up, so as to wrap at least two bales in film during the journey.

12. A wrapping vehicle according to claim 11, **characterised in that** the pick-up devices (6, 7) are arranged as mirror images and cooperate with a single adjustable device (9) for wrapping the bale, so as to wrap two bales one after the other.

13. A wrapping vehicle according to one or more of the preceding claims, **characterised in that** an automatic film roll changing system or an automatic quick change system is provided for completely replacing the wrapping head including the film roll (10).

14. A wrapping vehicle according to one or more of the preceding claims, **characterised in that** all the data about bale numbers, film consumption, manner and location of bale set-down are stored electronically to assist the contractor/farmer with his/her accounts.

## Revendications

1. Véhicule enrouleur (1) autotracté comprenant un châssis (2) et au moins un essieu directeur (3) ainsi qu'un moteur de commande particulier (5), dans lequel la commande des mécanismes de conduite et des cycles d'opérations du véhicule enrouleur (1) se fait directement ou indirectement en fonction de la position des balles, qui sont déposées par une presse à balles placée en tête et travaillant sur la même surface d'exploitation.

2. Véhicule enrouleur selon la revendication 1, **caractérisé par** une commande à distance des mécanismes de conduite.

3. Véhicule enrouleur selon la revendication 1 ou 2, **caractérisé par** un processus automatique, par exemple commandé par un capteur, de toutes les opérations, comme par exemple la réception des balles, la rotation des balles, l'enveloppement, le dépôt des balles.

4. Véhicule enrouleur selon une ou plusieurs des revendications précédentes, **caractérisé en ce que** le véhicule enrouleur (1) comprend des moyens pour l'enregistrement du trajet de la presse à balles et des moyens pour le guidage précis correspondant du véhicule enrouleur (1).

5. Véhicule enrouleur selon une ou plusieurs des revendications précédentes, **caractérisé par** un dispositif, lequel détermine, par exemple par l'intermédiaire du système GPS connu (détermination de la position), la position respective d'une presse à balle placée en tête et/ou la position d'une balle déposée.

6. Véhicule enrouleur selon une ou plusieurs des revendications précédentes, **caractérisé par** un dispositif électronique intégré dans le véhicule enrouleur (1), lequel dispositif comprend au moins un calculateur industriel avec une station d'émission et de réception ainsi qu'un calculateur industriel et une mémoire d'informations pour l'échange de données, par exemple avec une presse à balles ou un autre poste de commande électronique.

7. Véhicule enrouleur selon une ou plusieurs des revendications précédentes, **caractérisé en ce que** le véhicule enrouleur (1) coopère avec des repères situés au lieu de dépôt pour les balles complètement enroulées, par exemple avec des aides électroniques à la navigation comme des émetteurs radiogonométriques, un rayon laser, une barrière lumineuse ou similaires.

8. Véhicule d'enroulement selon une ou plusieurs des revendications précédentes, **caractérisé par** des moyens, par exemple des capteurs, lesquels déterminent les opérations défectueuses lors de l'enveloppement, interrompent le processus d'enroulement le cas échéant et/ou communiquent les défectuosités à une station informatique ou à l'opérateur d'une presse à balle placée en tête.

9. Véhicule enrouleur selon une ou plusieurs des revendications précédentes, **caractérisé par** des moyens, qui garantissent la sécurité de l'homme, de la machine et de l'animal, comme par exemple des témoins optiques et/ou acoustiques, mécaniques (boucle palpeuse) et/ou des capteurs d'infrarouge pour la détection de chaleur dégagée par des êtres vivants et des moteurs et un interrupteur d'arrêt d'urgence pouvant être actionné à distance pour arrêter le véhicule enrouleur (1).

10. Véhicule enrouleur selon une ou plusieurs des revendications précédentes, **caractérisé par** une analyse sensorielle de la distance, laquelle tient automatiquement le véhicule enrouleur (1) à distance de la presse placée en tête, pour éviter une collision.

11. Véhicule enrouleur selon une ou plusieurs des revendications précédentes, **caractérisé en ce que** le véhicule enrouleur (1) comprend au moins deux dispositifs (6, 7) pour la réception des balles, pour enrouler au moins deux balles avec un film pendant le trajet.

12. Véhicule enrouleur selon la revendication 11, **caractérisé en ce que** les dispositifs de réception (6, 7) sont disposés de manière inversée et coopèrent avec seulement un dispositif (9) réglable d'enveloppement des balles, pour enrouler deux balles l'une après l'autre.

13. Véhicule enrouleur selon une ou plusieurs des revendications précédentes, **caractérisé en ce qu'**est prévu un système automatique de changement des rouleaux de film ou un système automatisé de changement rapide pour le remplacement total de la tête d'enveloppement y compris le rouleau de film (10).

14. Véhicule enrouleur selon une ou plusieurs des revendications précédentes, **caractérisé en ce que** les données complètes concernant le nombre de balles, la consommation de film, le type et le lieu de dépôt des balles ainsi qu'au besoin le poids des balles sont sauvegardées de manière électronique pour les comptes de l'entrepreneur ou de l'agriculteur.
